# EUROPEAN PATENT SPECIFICATION

(11) **EP 2 225 344 B1**
(45) Date of publication and mention of the grant of the patent: **29.02.2012**
(21) Application number: 08860502.7
(22) Date of filing: 01.12.2008
(51) Int. Cl.: C09K 8/68, C09K 8/80

(54) **METHOD OF TREATING PROPPANTS AND FRACTURES IN-SITU WITH FLUORINATED SILANE**
VERFAHREN ZUR IN-SITU-BEHANDLUNG VON STÜTZMITTELN UND BRÜCHEN MIT FLUORIERTEM SILAN
PROCÉDÉ DE TRAITEMENT DES AGENTS DE SOUTÈNEMENT ET DES FRACTURES IN SITU AVEC UN SILANE FLUORÉ

(30) Priority: 05.12.2007 US 992442 P
(43) Date of publication of application: 08.09.2010
(73) Proprietor: 3M Innovative Properties Company, Saint Paul, MN 55133-3427 (US)
(72) Inventor: SKILDUM, John, D., Saint Paul, MN 55133-3427 (US); BARAN, Jimmie, R. Jr., Saint Paul, MN 55133-3427 (US); FAN, Wayne, W., Saint Paul, MN 55133-3427 (US); SHINBACH, Madeline, P., Saint Paul, MN 55133-3427 (US)
(74) Representative: Vossius & Partner
(86) International application number: PCT/US2008/085116
(87) International publication number: WO 2009/076080

(56) References cited:
- WO-A-2006/116868
- WO-A-2008/024865
- WO-A-2008/070704
- US-A1- 2007 029 085
- US-A1- 2007 225 176
- B. ADIBHATLA, ET AL: "Effect of Surfactants on Wettability of Near-Wellbore Regions of Gas Reservoirs" J PETROLEUM SCIENCE & ENGINEERING, vol. 52, 2006, pages 227-236, XP002519991 Elsevier

## Description

Oil and natural gas can be produced from wells having porous and permeable subterranean formations. The porosity of the formation permits the formation to store oil and gas, and the permeability of the formation permits the oil or gas fluid to move through the formation. Permeability of the formation is essential to permit oil and gas to flow to a location where it can be pumped from the well. Sometimes the permeability of the formation holding the gas or oil is insufficient for the desired recovery of oil and gas. In other cases, during operation of the well, the permeability of the formation drops to the extent that further recovery becomes uneconomical. In such cases, it is common to fracture the formation and prop the fracture in an open condition using a proppant material or propping agent. Such fracturing is usually accomplished by hydraulic pressure. The proppant material or propping agent is typically a particulate material, such as sand and (man-made) engineered proppants, such as resin coated sand and high-strength ceramic materials (e.g., sintered bauxite, crystalline ceramic bubbles, and ceramic (e.g., glass) beads), which are carried into the fracture by a fluid.

Further, for example, if relatively light weight, porous crystalline ceramic (e.g., alumina) proppants are used, fluid (e.g., the fracturing fluid) can penetrate into the proppant increasing its density, which can in turn can adversely affect the flow of the proppant into the fractured areas.

There continues to be a need for additional proppant options, preferably, proppant with improved properties. Also, for example, there is a desire, particularly for relatively light weight, porous proppants, to prevent, or at least reduce, penetration of fluids into the proppants.

In one aspect, the present disclosure provides a method of treating roppant particles present in a fractured subterranean geological formation comprising hydrocarbons, the method comprising injecting fluorinated silane into the fracture to treat the proppant particles in-situ according to claim 1. In some embodiments, the resulting fluorinated siloxane is bonded to the treated particle.

In another aspect, the present disclosure provides a method of fracturing a subterranean geological formation comprising hydrocarbons, the method comprising:
injecting a hydraulic fluid into a subterranean geological formation comprising hydrocarbons at a rate and pressure sufficient to open a fracture therein;
injecting into a fracture fluid comprising a plurality of proppant particles; and
subsequent to the injection of the hydraulic and fracture fluids, injecting fluorinated silane into the fracture to treat the proppant particles in-situ, according to claim 2.

In another aspect, the present disclosure provides a method of fracturing a subterranean geological formation comprising hydrocarbons, the method comprising:
injecting a hydraulic fluid into a subterranean geological formation comprising hydrocarbons at a rate and pressure sufficient to open a fracture therein;
injecting fluorinated silane into the fracture to treat the fracture in-situ; and subsequent to injecting the fluorinated silane into the fracture, the method further comprises injecting a fracture fluid comprising a plurality of proppant particles into the fracture according to claim 8. In some embodiments, at least some of the proppant injected into the fracture is treated with the fluorinated silane prior to their injection.

In some embodiments, the fluorinated silane comprises a reactive fluorinated silane selected from the group consisting of:

Rf{-Q-[SiY₃₋ₓ(R)ₓ]_{y}}_{z};

a polymeric fluorinated composition comprising:
   at least one divalent unit represented by the formula: 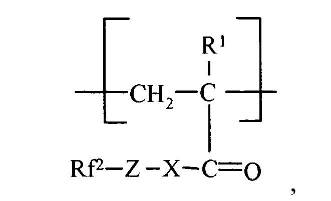 and
   at least one of
      at least one divalent unit represented by the formula: 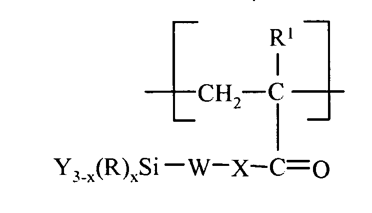 or
      a chain-terminating group represented by the formula:

      -S-W-SiY₃₋ₓ(R)ₓ;

      and
a fluorinated urethane oligomer of at least two repeat units comprising:
   at least one end group represented by the formula -O-Z-Rf², and
   at least one end group represented by the formula -X¹-W-SiY₃₋ₓ(R)ₓ; wherein
Rf is a monovalent or multivalent perfluoroalkyl group optionally interrupted by at least one -O-;
Rf² is a monovalent perfluoroalkyl group optionally interrupted by at least one -O-;
each R is independently selected from the group consisting of alkyl having one to six carbon atoms and aryl;
Q is a divalent or trivalent organic linking group;
each Y is independently selected from the group consisting of hydroxyl, alkoxy, acyloxy, and halogen;
each R¹ is independently selected from the group consisting of hydrogen and alkyl having one to four carbon atoms;
each W is independently selected from the group consisting of alkylene, arylalkylene, and arylene, wherein alkylene is optionally interrupted or substituted by at least one heteroatom;
each X is independently selected from the group consisting of -NH-, -O-, and -S-;
X¹ is selected from the group consisting of -N(R³)-, -S-, -O-, -O-C(O)-NH-, and -O-alkylene-O-C(O)-NH-;
Z is a divalent organic linking group;
x is 0,1, or 2;
y is 1 or 2; and
z is 1, 2, 3, or 4.

In some embodiments, the fluorinated silane comprises at least one fluorinated urethane oligomer of at least two repeat units comprising:
at least one end group represented by the formula

   -O-(CH₂)ₙN(R⁴)S(O)₂-Rf³,

   and
at least one end group represented by the formula

   -NH-(CH₂)ₙ-SiY₃;
wherein
R⁴ is alkyl having one to four carbon atoms
Rf³ is a perfluoroalkyl group having from one to eight carbon atoms;
each Y is independently selected from the group consisting of hydroxyl, alkoxy, acyloxy, and halogen; and
each n is independently an integer from 1 to 4.

In some embodiments, the fracture has a conductivity improved by the presence of the (resulting) fluorinated siloxane. The conductivity of a fracture is a measure of the effectiveness of a hydraulically treated fracture or essentially how well the fracture improves the flow of oil or gas from the formation. The conductivity of a fracture can be determined using API Conductivity Test RP 61, entitled "Recommended Practices for Evaluating Short Term Proppant Pack Conductivity" (October, 1989).

Treated proppants and/or fractures described herein are useful, for example, in facilitating the removal of fracturing fluids that have been injected into subterranean formation, including increasing the removal rate of the fracturing fluid. While not wanting to be bound by theory, it is believed this enhanced back-production of the fracturing fluids is due to the fluorinated siloxane altering the wettability of the proppant and/or fracture, thus rendering the proppant and/or fracture hydrophobic, oleophobic, and non-wetted by the fracturing fluids. An additional advantage of enhancing the fluid production from the fracture comprising the proppant and/or fracture treated with the fluorinated silane is thought to be the reduction in turbulent flow that should significantly reduce non-Darcy effects. Non-Darcy effects can effectively reduce the conductivity of a fracture by reducing fluid production. Advantages of embodiments of treated particles having a plurality of pores is that the treated particle has at least one of water or oil imbibition up to 95% as compared to a comparable, untreated particle.

Exemplary proppants for practicing the methods described herein include those known in the art for use in fractured subterranean geological formations comprising hydrocarbons, including engineered proppants (e.g., resin coated sand, sintered bauxite, crystalline ceramic bubbles, and ceramic (e.g., glass) beads), as well as sand graded to desired industry standards). The term "ceramic" as used herein refers to glasses, crystalline ceramics, glass-ceramics, and combinations thereof. Suitable proppant can be made by techniques known in the art and/or obtained from commercial sources. Exemplary proppants include those made of a material selected from the group consisting of sand, thermoplastic, clay, glass, and alumina (e.g., sintered bauxite). Examples of proppants include sand, clay-based particles, thermoplastic particles, and sintered bauxite particles. Sand proppants are available, for example, from Badger Mining Corp., Berlin, WI; Borden Chemical, Columbus, OH; Fairmont Minerals, Chardon, OH. Thermoplastic proppants are available, for example, from the Dow Chemical Company, Midland, MI; and BJ Services, Houston, TX. Clay-based proppants are available, for example, from CarboCeramics, Irving, TX; and Saint-Gobain, Courbevoie, France. Sintered bauxite ceramic proppants are available, for example, from Borovichi Refractories, Borovichi, Russia; 3M Company, St. Paul, MN; CarboCeramics, and Saint Gobain. Engineered proppants such as glass bead and ceramic microsphere proppants are available, for example, from Diversified Industries, Sidney, British Columbia, Canada; and 3M Company.

In some embodiments, the proppant is at least 100 micrometers (in some embodiments, at least 200, 300, 400, 500, 600, 700, 800, 900, 1000, 1100, 1200, 1300, 1400, 1500, 1600, 1700, 1800, 1900, 2000, 2500, or even at least 3000 micrometers; in some embodiments, in a range from 500 micrometers to 1700 micrometers) in size. In some embodiments, the proppant have particle sizes in a range from 100 micrometers to 3000 micrometers (i.e., about 140 mesh to about 5 mesh) (in some embodiments, in a range from 1000 micrometers to 3000 micrometers, 1000 micrometers to 2000 micrometers, 1000 micrometers to 1700 micrometers (i.e., about 18 mesh to about 12 mesh), 850 micrometers to 1700 micrometers (i.e., about 20 mesh to about 12 mesh), 850 micrometers to 1200 micrometers (i.e., about 20 mesh to about 16 mesh), 600 micrometers to 1200 micrometers (i.e., about 30 mesh to about 16 mesh), 425 micrometers to 850 micrometers (i.e., about 40 to about 20 mesh), 300 micrometers to 600 micrometers (i.e., about 50 mesh to about 30 mesh), 250 micrometers to 425 micrometers (i.e., about 60 mesh to about 40 mesh), 200 micrometers to 425 micrometers (i.e., about 70 mesh to about 40 mesh), or 100 micrometers to 200 micrometers (i.e., about 140 mesh to about 70 mesh).

In some embodiments, the proppants (e.g., ceramic particles) have a plurality of pores. The pores can be closed or open with respect to each other, or a mixture of opened and closed porosity. In some embodiments, the proppants (e.g., ceramic particles) have a density of at least 2 g/cm³ (in some embodiments, at least 2.5 g/cm³, at least 3 g/cm³; in some embodiments, in a range from 2 glcm³ to 3 g/cm³).

In some embodiments, the fluorinated silane comprises a reactive fluorinated silane represented by the formula (I):

Rf{-Q-[SiY₃₋ₓ(R)ₓ]_{y}}_{z} I,

wherein Rf, Q, Y, R, x, y, and z are as defined above. Rf is a monovalent or multivalent perfluoroalkyl group optionally interrupted by at least one -O-. Rf can be a linear, branched, and/or cyclic structure, that may be saturated or unsaturated. The term "perfluoroalkyl group" includes groups in which all C-H bonds are replaced by C-F bonds as well as groups in which hydrogen or chlorine atoms are present instead of fluorine atoms provided that not more than one atom of either hydrogen or chlorine is present for every two carbon atoms. In some embodiments, when hydrogen and/or chlorine are present, Rf includes at least one trifluoromethyl group.

In some embodiments, Rf is a monovalent perfluoroalkyl group of formula (CₙF₂ₙ₊₁), wherein n is an integer from 1 to 20 (in some embodiments, from 3 to 12 or even from 3 to 8). In some embodiments, Rf is C₄F₉.

In some embodiments, Rf is a perfluoropolyether group having two or more in-chain oxygen atoms. In some embodiments, the perfluoropolyether group comprises perfluorinated repeating units selected from the group consisting of -(CₙF₂ₙ)-, -(CₙF₂ₙO)-, -(CF(Rf⁴))-, -(CF(Rf⁴)O)-, -(CF(Rf⁴)CₙF₂ₙO)-, -(CₙF₂ₙCF(Rf⁴)O)-, -(CF₂CF(Rf⁴)O)-, and combinations thereof (in some embodiments, -(CₙF₂ₙO)-, -(CF(Rf⁴)O)-, -(CF(Rf⁴)CₙF₂ₙO)-, -(CₙF₂ₙCF(Rf⁴)O)-, -(CF₂CF(Rf⁴)O)-, and combinations thereof); wherein Rf⁴ is a perfluoroalkyl group, a perfluoroalkoxy group, or a perfluoroether group, each of which can be linear, branched, or cyclic, and can have 1 to 9 carbon atoms and up to 4 oxygen atoms; and n is an integer from 1 to 12 (in some embodiments, from 1 to 6, from 1 to 4, or even from 1 to 3). The perfluorinated repeating units may be arranged randomly, in blocks, or in alternating sequence.

In some embodiments, Rf is a monovalent (i.e., z is 1) perfluoropolyether group. In some of these embodiments, Rf is terminated with CₙF₂ₙ₊₁-, CₙF₂ₙ₊₁O-, or X'CₙF₂ₙO-, wherein X' is a hydrogen or chlorine atom. In some of these embodiments, the terminal group is CₙF₂ₙ₊₁- or CₙF₂ₙ₊₁O-, wherein n is an integer from 1 to 6 or from I to 3. In some of these embodiments, the approximate average structure of Rf is C₃F₇O(CF(CF₃)CF₂O)ₚCF(CF₃)- or CF₃O(C₂F₄O)ₚCF₂-, wherein the average value of p is 3 to 50.

In some embodiments, Rf is a divalent (i.e., z is 2) perfluoropolyether group. In some of these embodiments, Rf is selected from the group consisting of

-CF₂O(CF₂O)ₘ(C₂F₄O)ₚCF₂-,

-CF(CF₃)-(OCF₂CF(CF₃))ₚO-Rf⁵-O(CF(CF₃)CF₂O)ₚCF(CF₃)-, -CF₂O(C₂F₄O)ₚCF₂-,

and
-(CF₂)₃O(C₄F₈O)ₚ(CF₂)₃-, wherein Rf⁵ is a divalent, perfluoroalkylene group containing at least one carbon atom and optionally interrupted in chain by O or N; m is 1 to 50; and p is 3 to 40. In some embodiments, Rf⁵ is (CₙF₂ₙ), wherein n is 2 to 4. In some embodiments, Rf is selected from the group consisting of -CF₂O(CF₂O)ₘ(C₂F₄O)ₚCF₂-, -CF₂O(C₂F₄O)ₚCF₂-, and -CF(CF₃)-(OCF₂CF(CF₃))ₚO-(CₙF₂ₙ)-O(CF(CF₃)CF₂O)ₚCF(CF₃)-, wherein n is 2 to 4, and the average value of m+p or p or p+p, respectively, is from about 4 to about 24. In some embodiments, p and m may be non-integral.

The divalent or trivalent organic linking group, Q, can be a linear, branched, or cyclic structure, that may be saturated or unsaturated and optionally contains one or more heteroatoms selected from the group consisting of sulfur, oxygen, and nitrogen, and/or optionally contains one or more functional groups selected from the group consisting of ester, amide, sulfonamide, carbonyl, carbonate, urea, and carbamate. Q includes at least 2 carbon atoms and not more than about 25 carbon atoms (in some embodiments, not more than 24, 23, 22, 21, 20, 19, 18, 17, 16, 15, 14, 13, 12, 11, or even not more than 10 carbon atoms). When two, three, or four Q groups are present, each Q is independently selected. In some embodiments, Q is a linear hydrocarbon containing 1 to about 10 carbon atoms, optionally containing 1 to 4 heteroatoms and/or 1 to 4 functional groups. In some of these embodiments, Q contains one functional group.

Exemplary divalent Q groups include -SO₂NR²(CH₂)ₖO(O)C-, -CON(R²)(CH₂)ₖO(O)C-, -(CH₂)ₖO(O)C-, -C(O)N(R²)-(CH₂)ₖ-, -CH₂CH(O-alkyl)CH₂O(O)C-, -(CH₂)ₖC(O)O(CH₂)ₖ-, -(CH₂)ₖSC(O)-, -(CH₂)ₖO(CH₂)ₖO(O)C-, -(CH₂)ₖS(CH₂)ₖO(O)C-, -(CH₂)ₖSO₂(CH₂)ₖO(O)C-, -(CH₂)ₖS(CH₂)ₖOC(O)-, -(CH₂)ₖSO₂N(R²)(CH₂)ₖO(O)C-, -(CH₂)ₖSO₂-, -SO₂N(R²)(CH₂)ₖO(CH₂)ₖ-, -SO₂N(R²)(CH₂)ₖ-, -(CH₂)ₖO(CH₂)ₖC(O)O(CH₂)ₖ-, -(CH₂)ₖSO₂N(R²)(CH²)ₖC(O)O(CH₂)ₖ-, -(CH₂)ₖSO₂(CH₂)ₖC(O)O(CH₂)ₖ-, -CON(R²)(CH²)ₖC(O)O(CH²)ₖ-, -(CH₂)ₖS(CH₂)ₖC(O)O(CH₂)ₖ-, -CH₂CH(O-alkyl)CH₂C(O)O(CH₂)ₖ-, -SO₂N(R²)(CH₂)ₖC(O)O(CH₂)-, -(CH₂)ₖO(CH₂)ₖ-, -CH₂O-(CH₂)ₖ-, -OC(O)N(R²)(CH₂)ₖ-, -(CH₂)ₖN(R²)-, -CₖH₂ₖ-OC(O)NH-, -(CH₂)ₖN(R²)C(O)O(CH₂)ₖ-,-(CH₂)ₖ-, -CₖH₂ₖ-, -C(O)S-(CH₂)ₖ-, and -CH₂OC(O)N(R²)-(CH₂)ₖ-, wherein R² is hydrogen, C₁₋₄ alkyl, or phenyl; and k is 2 to about 25 (in some embodiments, 2 to 15 or even 2 to 10).

Exemplary trivalent Q groups include 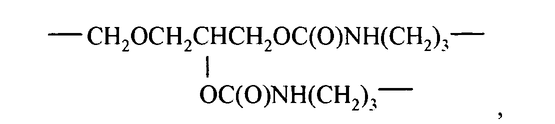 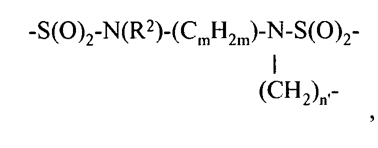 and 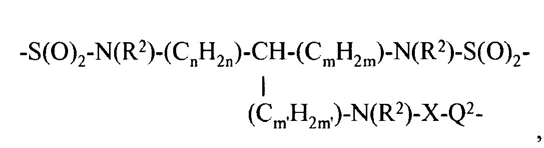 wherein R² is hydrogen,
C₁₋₄ alkyl, or phenyl; each n and m are independently integers from 1 to 20 (in some embodiments, from 1 to 6 or even from 1 to 4); m' is an integer from 1 to 20 (in some embodiments, from 1 to 10 or even from 1 to 3); Q² is selected from the group consisting of -C(O)NH-(CH₂)ₙ- and -(CH₂)ₙ-, wherein n' is an integer from 0 to 4; and X is selected from the group consisting of -NH-, -O-, and -S-.

Each Y in Formula I is selected from the group consisting of hydroxyl, alkoxy (e.g., of 1 to 4 or even 1 to 2 carbon atoms), aryloxy (e.g., phenoxy), acyloxy (e.g., of 1 to 4 or even 1 to 2 carbon atoms), polyalkyleneoxy, and halogen (e.g., Cl or Br). "Polyalkyleneoxy" refers to -O-(CHR⁵-CH₂O)_{q}-R³ wherein R³ is C₁₋₄alkyl, R⁵ is hydrogen or methyl, with at least 70% of R⁵ being hydrogen, and q is 1 to 40, or even 2 to 10. In some embodiments, each Y is independently a hydrolyzable group selected from the group consisting of alkoxy (e.g., of 1 to 4 or even 1 to 2 carbon atoms), aryloxy (e.g., phenoxy), and halogen (e.g., Cl or Br). These hydrolysable groups are capable of hydrolyzing, for example, in the presence of water, optionally under acidic or basic conditions, producing groups capable of undergoing a condensation reaction, for example silanol groups. In some embodiments, R is alkyl of one to six carbon atoms (e.g., methyl, ethyl, propyl, isopropyl, butyl, isobutyl). In some embodiments, R is aryl (e.g., phenyl). In some embodiments, x is 0. In some embodiments, x is 1.

Some reactive fluorinated silanes of formula I are commercially available, for example, a fluorinated silane (available, for example, from Daikin Industries, Inc., New York, NY under the trade designation "OPTOOL DSX") and tridecafluorooctyl functional silanes (available, for example, from United Chemical Technologies, Inc., Bristol, PA under the trade designation "PETRARCH" (e.g., grades "T2492" and "T2494").

The compounds of formula I described above can be synthesized using conventional synthetic methods. For example, when Rf is a perfluoropolyether group, perfluoropolyether esters or functional derivatives thereof can be combined with a functionalized alkoxysilane, such as a 3-aminopropylalkoxysilane, according to the method described in U. S. Pat. No. 3,810,874 (Mitsch et al.). It will be understood that functional groups other than esters may be used with equal facility to incorporate silane groups into a perfluoropolyether. Some perfluoropolyether diesters are commercially available (e.g., CH₃OC(O)CF₂(OCF₂CF₂)₉₋₁₀(OCF₂)₉₋₁₀CF₂C(O)OCH₃, a perfluoropolyether diester available, for example, from Solvay Solexis, Houston, TX, under the trade designation "FOMBLIN ZDEAL"). Other perfluoropolyether diesters may be prepared, for example, through direct fluorination of a hydrocarbon polyether diester by methods known in the art (see, e.g., U.S. Pat. Nos. 5,578,278 (Fall et al.) and 5,658,962 (Moore et al.). Perfluoropolyether diesters (and perfluoropolyether monoesters) can also be prepared, for example, by oligomerization of hexafluoropropylene oxide (HFPO) and functionalization of the resulting perfluoropolyether carbonyl fluoride according to the methods described in U.S. Pat. No. 4,647,413 (Savu). An exemplary fluorinated silane of formula I wherein Rf is a divalent perfluoropolyether group is (CH₃O)₃Si(CH₂)₃NHCOCF₂(OCF₂CF₂)₉₋₁₀(OCF₂)₉₋₁₀CF₂CONH(CH₂)₃Si(OCH₃)₃.

The above-described polyfluoropolyether silanes typically include a distribution of oligomers and/or polymers, and above structures are approximate average structures where the approximate average is over this distribution. These distributions may also contain perfluoropolyethers with no silane groups or more than two silane groups. Typically, distributions containing less than about 10% by weight of compounds without silane groups can be used.

Methods of making fluorinated silanes of the formula I, wherein Rf is a monovalent perfluoroalkyl group, are known in the art (e.g., by alkylation of fluorinated alcohols or sulfonamides with chloroalkyltrialkoxysilanes, or alkylation with allyl chloride followed by hydrosilation with HSiCl₃) (see, e.g., U.S. Pat. No. 5,274,159 (Pellerite et al.). Fluorinated silanes represented by the formulas 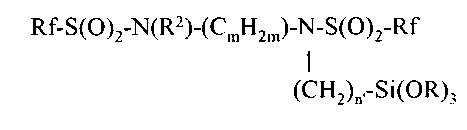 and 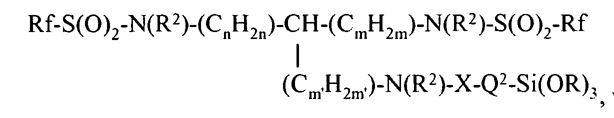 wherein each Rf is independently CₚF₂ₚ₊₁, wherein p is 1 to 8 and R², R, m, n, m', n', X, and Q² are as defined above, can be prepared, for example, by similar methods (e.g., by alkylation of Rf-S(O)₂-N(R²)(Cₙ₊ₘH₂₍ₙ₊ₘ₎)-NH(S(O)₂-Rf or Rf-S(O)₂-N(R²)-(CₙH₂ₙ)-CH(OH)-(CₘH₂ₘ)-N(R²)-S(O)₂-Rf), respectively, with chloroalkyltrialkoxysilanes) or by reaction of Rf-S(O)₂-N(R²)-(CₙH₂ₙ)-CH(OH)-(CₘH₂ₘ)-N(R²)-S(O)₂-Rf with isocyanatoalkyltrialkoxysilanes as described in U.S. Pat. App. Pub. No. 2006/0147645 (Dams et al.).

Perfluoroalkyl silanes of formula I, wherein Rf is a monovalent perfluoroalkyl group, include, for example, any one or any combination of the following: C₃F₇CH₂OCH₂CH₂CH₂Si(OCH₃)₃; C₇F₁₅CH₂OCH₂CH₂CH₂Si(OCH₃)₃; C₇F₁₅CH₂OCH₂CH₂CH₂Si(OCH₂CH₃)₃; C₇F₁₅CH₂OCH₂CH₂CH₂Si(CH₃)(OCH₃)₂; C₇F₁₅CH₂OCH₂CH₂CH₂SiCl₃; C₇F₁₅CH₂OCH₂CH₂CH₂Si(CH₃)Cl₂; C₇F₁₅CH₂OCH₂CH₂CH₂SiCl(OCH₃)₂; C₇F₁₅CH₂OCH₂CH₂CH₂SiCl₂(OC₂H₅); C₇F₁₅C(O)NHCH₂CH₂CH₂Si(OCH₃)₃; CF₃(CF₂CF(CF₃))₃CF₂C(O)NHCH₂CH₂CH₂Si(OCH₂CH₃)₃; C₈F₁₇SO₂N(CH₂CH₃)CH₂CH₂CH₂Si(OCH₃)₃; C₈F₁₇SO₂N(CH₂CH₃)CH₂CH₂CH₂Si(OCH₂CH₃)₃; C₄F₉SO₂N(CH₃)CH₂CH₂CH₂Si(OCH₃)₃; C₄F₉SO₂N(CH₃)CH₂CH₂CH₂Si(OCH₂CH₃)₃; C₈F₁₇CH₂CH₂Si(OCH₃)₃; C₆F₁₃CH₂CH₂Si(OCH₂CH₃)₃; C₆F₁₃CH₂CH₂Si(Cl)₃; C₈F₁₇CH₂CH₂Si(OCH₂CH₃)₃; C₈F₁₇SO₂N(CH₂CH₃)CH₂CH₂CH₂SiCl₃; C₈F₁₇SO₂N(CH₃)CH₂CH₂CH₂Si(CH₃)Cl₂; C₈F₁₇CH₂OCH₂CH₂CH₂Si(OAc)₃; [C₄F₉S(O)₂N(CH₃)CH₂]₂CHOCH₂CH₂CH₂Si(OCH₃)₃; [C₄F₉S(O)₂N(CH₃)CH₂]₂CHOC(O)NHCH₂CH₂CH₂Si(OCH₃)₃, and C₄P₉S(O)₂N(CH₃)CH₂CH₂CH₂N(S(O)₂C₄F₉)CH₂CH₂CH₂Si(OCH₃)₃. Suitable fluorinated silanes of formula I include a mixture of isomers (e.g., a mixture of compounds containing linear and branched perfluoroalkyl groups).

In some embodiments, useful fluorinated siloxanes comprise a condensation product of a polymeric fluorinated composition comprising:
at least one divalent unit represented by the formula (II): 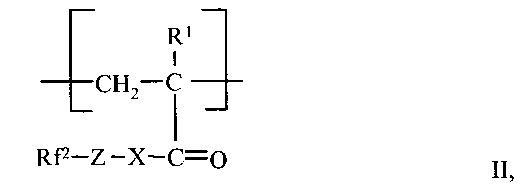 and
at least one of
   at least one divalent unit represented by the formula (III): 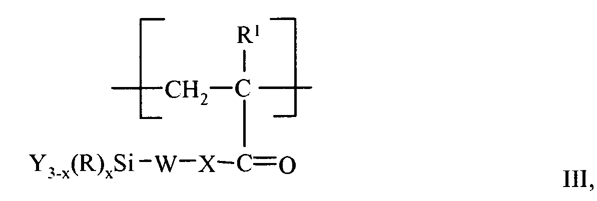 or
   a chain-terminating group represented by the formula (IV):

   -S-W-SiY₃₋ₓ(R)ₓ IV,
wherein, Rf², R¹, R, W, X, Y, Z, and x are as defined above.

The term "polymeric" refers to both oligomers and polymers. In some embodiments, the number of units represented by formula II is in a range from 1 to 100 (in some embodiments from 1 to 20). In some embodiments, the units represented by formula II are present in a range from 40% by weight to 80% by weight (or even from 50% to 75% by weight) based on the total weight of the polymeric fluorinated composition. In some embodiments, the number of units represented by formula III is in a range from 0 to 100 (or even from 0 to 20). In some embodiments, the units represented by formula III are present in a range from 1% to 20% by weight (or even 2% to 15% by weight) based on the total weight of the polymeric fluorinated composition. In some embodiments, the polymeric fluorinated composition contains at least 5 mole % (based on total moles of monomers) of Y groups. In some embodiments, the polymeric fluorinated composition has a number average molecular weight in a range from 400 to 100000, from 3500 to 100000, or even from 10000 to 75000 grams per mole or in a range from 600 to 20000, or even from 1000 to 10000 grams per mole. It will be appreciated by one skilled in the art that useful polymeric fluorinated compositions exist as a mixture of compounds.

A divalent unit of formula II is typically introduced into a polymeric fluorinated composition by polymerizing a monomer of the formula (IIa):

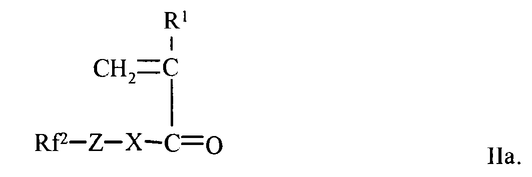

Fluorochemical monomers of formula IIa and methods for the preparation thereof are known in the art (see, e.g., U.S. Pat. No. 2,803,615 (Ahlbrecht et al.). Examples of such compounds include, for example, acrylates or methacrylates derived from fluorochemical telomer alcohols, acrylates or methacrylates derived from fluorochemical carboxylic acids, perfluoroalkyl acrylates or methacrylates as disclosed in U.S. Pat. No. 5,852,148 (Behr et al.), perfluoropolyether acrylates or methacrylates as described in U.S. Pat. No. 4,085,137 (Mitsch et al.), and fluorinated acrylamides, methacrylamides, thioacrylates, and meththioacrylates as described in U.S. Pat. No. 6,689,854 (Fan et al.).

In some embodiments of formulas II and IIa, Rf² is a monovalent perfluoroalkyl group described above for Rf in embodiments of a compound of formula I .

The divalent organic linking group, Z, can be a linear, branched, or cyclic structure, that may be saturated or unsaturated and optionally contains one or more heteroatoms selected from the group consisting of sulfur, oxygen, and nitrogen, and/or optionally contains one or more functional groups selected from the group consisting of ester, amide, sulfonamide, carbonyl, carbonate, ureylene, and carbamate. Z includes at least 1 carbon atom and not more than about 25 carbon atoms (in some embodiments, not more than 24, 23, 22, 21, 20, 19, 18, 17, 16, 15, 14, 13, 12, 11, or even not more than 10 carbon atoms). In some embodiments of formulas II and IIa, Z is a divalent organic linking group as described above for divalent Q groups. In some embodiments of formulas II and IIa, Z is -C_{y}H_{2y}-, -CON(R¹)C_{y}H_{2y}-, -SO₂N(R¹)C_{y}H_{2y}-, or -C_{y}H_{2y}SO₂N(R¹)C_{y}H_{2y}-, wherein R¹ is hydrogen, or alkyl of one to four carbon atoms, and y is independently an integer from 1 to 6 (in some embodiments from 2 to 4).
In some embodiments, R¹ is hydrogen. In some embodiments, R¹ is alkyl of one to four carbon atoms.

Examples of fluorinated monomers of formula IIa include:

C₄F₉SO₂N(CH₃)C₂H₄OC(O)CH=CH₂; C₅F₁₁SO₂N(C₂H₅)C₂H₄OC(O)CH=CH₂;

C₆F₁₃SO₂N(C₂H₅)C₂H₄OC(O)C(CH₃)=CH₂;

C₃F₇SO₂N(C₄H₉)C₂H₄OC(O)CH=CH₂;

C₄F₉CH₂CH₂OC(O)CH=CH₂; C₅F₁₁CH₂OC(O)CH=CH₂;

C₆F₁₃CH₂CH₂OC(O)CH=CH₂; CF₃(CF₂)₂CH₂OC(O)CH=CH₂,

CF₃(CF₂)₂CH₂OC(O)C(CH₃)=CH₂, CF₃(CF₂)₃CH₂OC(O)C(CH₃)=CH₂,

CF₃(CF₂)₃CH₂OC(O)CH=CH₂,

CF₃(CF₂)₃S(O)₂N(R^{a})-(CH₂)₂-OC(O)CH=CH₂,

CF₃(CF₂)₃S(O)₂N(R^{a})-(CH₂)₂-OC(O)C(CH₃)=CH₂,

CF₃CF₂(CF₂CF₂)₂₋₈(CH₂)₂OC(O)CH=CH₂,

CF₃(CF₂)₇(CH₂)₂OC(O)C(CH₃)=CH₂, CF₃(CF₂)₇S(O)₂N(R^{a})-(CH₂)₂-OC(O)CH=CH₂,

CF₃(CF₂)₇S(O)₂N(R^{a})-(CH₂)₂-OC(O)C(CH₃)=CH₂,

CF₃(CF₂)₇CH₂CH₂S(O)₂N(CH₃)-(CH₂)₂-OC(O)C(CH₃)=CH₂,

CF₃O(CF₂CF₂)ᵤCH₂OC(O)CH=CH₂, CF₃O(CF₂CF₂)ᵤCH₂OC(O)C(CH₃)=CH₂,

C₃F₇O(CF(CF₃)CF₂O)ᵤCF(CF₃)CH₂OC(O)CH=CH₂,

and

C₃F₇O(CF(CF₃)CF₂O)ᵤCF(CF₃)CH₂OC(O)C(CH₃)=CH₂; wherein R^{a} represents methyl,

ethyl or n-butyl, and u is about 1 to 50.

Polymeric fluorinated compositions described herein may have a divalent unit represented by formula III. A divalent unit of formula III is typically introduced into a polymeric fluorinated composition by copolymerizing a monomer of formula IIa with a monomer of the formula (IIIa): 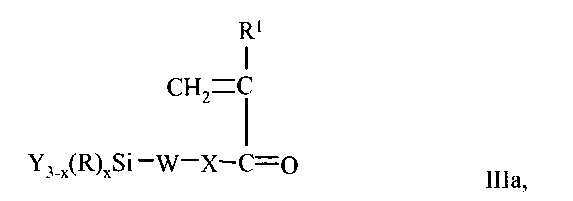 wherein R¹, R, W, X, Y, and x are as defined above. In some embodiments of formula IIIa, the groups R¹, R, Y, and x are those described above for embodiments of a compound of formula I. In some embodiments, W is alkylene of one to four carbon atoms. Some monomers of formula IIIa are commercially available (e.g., CH₂=C(CH₃)C(O)OCH₂CH₂CH₂Si(OCH₃)₃ (available, for example, from Union Carbide, New York, NY, under the trade designation "A-174")); others can be made by conventional synthetic methods.

Polymeric fluorinated compositions useful in the fracturing method described herein may optionally include other interpolymerized divalent units, which may contain hydrophobic, hydrophilic, or water-solubilizing groups. Useful monomers (including water-solubilizing monomers) that can be combined with those of formulas IIa and IIIa include non-fluorinated monomers described in U.S. Pat. Nos. 6,977,307 (Dams) and 6,689,854 (Fan et. al.).

Useful polymeric fluorinated compositions may have a chain-terminating group represented by formula IV. A chain-terminating group of formula IV may be incorporated into a polymeric fluorinated composition, for example, by polymerizing monomers of formula IIa, optionally IIIa, and optionally at least one non-fluorinated monomer in the presence of a chain-transfer agent of the formula (IVa):

HS-W-SiY₃₋ₓ(R)ₓ IVa,

wherein R, W, Y, and x are as defined above. In some embodiments of formula IIIa, the groups R, Y, and x are those described above for embodiments of a compound of formula I. In some embodiments, W is alkylene of one to four carbon atoms. Some monomers of formula IVa are commercially available (e.g., 3-mercaptopropyltrimethoxysilane (available, for example, from Huls America, Inc., Somerset, N.J., under the trade designation "DYNASYLAN")); others can be made by conventional synthetic methods. A chain-terminating group of formula IV can also be incorporated into a polymeric fluorinated composition by polymerizing monomers of formula IIa, optionally IIIa, and optionally at least one non-fluorinated monomer in the presence of a hydroxyl-functional chain-transfer agent (e.g., 2-mercaptoethanol, 3-mercapto-2-butanol, 3-mercapto-2-propanol, 3-mercapto-1-propanol, 3-mercapto-1,2-propanediol) and subsequent reaction of the hydroxyl functional group with, for example, a chloroalkyltrialkoxysilane. In a polymerization reaction to make a polymeric fluorinated composition, a single chain transfer agent or a mixture of different chain transfer agents may be used to control the number of polymerized monomer units in the polymer and to obtain the desired molecular weight of the polymeric fluorochemical silane.

The polymeric fluorinated oligomeric composition can conveniently be prepared through a free radical polymerization of a fluorinated monomer with optionally a non-fluorinated monomer (e.g., a water-solubilizing monomer) and at least one of a monomer containing a silyl group or a chain transfer agent containing a silyl group using methods known in the art. See, for example, the methods described in U.S. Pat. Nos. 6,977,307 (Dams) and 6,689,854 (Fan et. al.).

In some embodiments, the fluorinated silane comprises at least one fluorinated urethane oligomer of at least two repeat units (e.g., from 2 to 20 repeating units) comprising at least one end group represented by the formula -O-Z-Rf², and at least one end group represented by the formula -X¹-W-SiY₃₋ₓ(R)ₓ. In some embodiments, the fluorinated urethane oligomer of at least two repeat units comprises at least one end group represented by the formula -O-(CH₂)ₙN(R⁴)S(O)₂-Rf³, and at least one end group represented by the formula -NH-(CH₂)ₙ-SiY₃, wherein Z, Rf², R⁴, Rf³, Y, and x are as defined above, and n is an integer from 1 to 4.

The term "urethane oligomer" refers to oligomers containing at least one of urethane or urea functional groups. In some embodiments, the at least one fluorinated urethane oligomer of at least two repeat units comprises the reaction product of (a) at least one polyfunctional isocyanate compound; (b) at least one polyol; (c) at least one fluorochemical monoalcohol; (d) at least one silane; and optionally (e) at least one water-solubilizing compound comprising at least one water-solubilizing group and at least one isocyanate-reactive hydrogen containing group. In some embodiments, at least one polyamine may also be used.

Useful fluorine urethane oligomers may be prepared, for example, by reaction of at least one polyfunctional isocyanate with at least one polyol and reaction of the resulting oligomer with at least one fluorinated monoalcohol and at least one silane. Exemplary reaction conditions, polyfunctional isocyanates, polyols, fluorochemical monoalcohols, silanes, and water-solubilizing compounds are described in U.S. Pat. No. 6,646,088 (Fan et al.).

In some embodiments of formula -O-Z-Rf², Rf² is a monovalent perfluoroalkyl group described above for Rf in embodiments of a compound of formula I.

The divalent organic linking group, Z, in formula -O-Z-Rf², can be a linear, branched, or cyclic structure, that may be saturated or unsaturated and optionally contains one or more heteroatoms selected from the group consisting of sulfur, oxygen, and nitrogen, and/or optionally contains one or more functional groups selected from the group consisting of ester, amide, sulfonamide, carbonyl, carbonate, ureylene, and carbamate. Z includes at least 1 carbon atom and not more than about 25 carbon atoms (in some embodiments, not more than 24, 23, 22, 21, 20, 19, 18, 17, 16, 15, 14, 13, 12, 11, or even not more than 10 carbon atoms). In some embodiments of formulas II and IIa, Z is a divalent organic linking group as described above for divalent Q groups. In some embodiments of formulas II and IIa, Z is -C_{y}H₂y-, -CON(R¹)C_{y}H_{2y}-, -SO₂N(R¹)C_{y}H_{2y}-_{,} or -C_{y}H_{2y}SO₂N(R¹)C_{y}H_{2y}-, wherein R¹ is hydrogen or alkyl of one to four carbon atoms, and y is independently an integer from 1 to 6 (in some embodiments from 2 to 4). In some embodiments, Rf³ is a perfluoroalkyl group having from 2 to 5 (e.g., 4) carbon atoms. An end-group of the formula -O-Z-Rf² ((in some embodiments, -O-(CH₂)ₙN(R⁴)S(O)₂-Rf³) can be incorporated into a fluorinated urethane oligomer by carrying out the condensation polymerization reaction (e.g., as described above) in the presence of a fluorinated monoalcohol of formula HO-Z-Rf².

Useful fluorinated monoalcohols include, for example, 2-(N-methylperfluorobutanesulfonamido)ethanol; 2-(N-ethylperfluorobutanesulfonamido)ethanol; 2-(N-methylperfluorobutanesulfonamido)propanol; N-methyl-N-(4-hydroxybutyl)perfluorohexanesulfonamide; 1,1,2,2- tetrahydroperfluorooctanol; 1,1-dihydroperfluorooctanol; C₆F₁₃CF(CF₃)CO₂C₂H₄CH(CH₃)OH; n-C₆F₁₃CF(CF₃)CON(H)CH₂CH₂OH; C₄F₉OC₂F₄OCF₂CH₂OCH₂CH₂OH; C₃F₇CON(H)CH₂CH₂OH; 1,1,2,2,3,3-hexahydroperfluorodecanol; C₃F₇O(CF(CF₃)CF₂O)₁₋₃₆CF(CF₃)CH₂OH; CF₃O(CF₂CF₂O)₁₋₃₆CF₂CH₂OH; and mixtures thereof. In some embodiments, the fluorinated monoalcohol is represented by the formula HO-(CₙH₂ₙ)N(R⁴)S(O)₂-Rf³.

An end-group of the formula -X¹-W-SiY₃₋ₓ(R)ₓ can be incorporated into a fluorinated urethane oligomer by carrying out the polymerization reaction (e.g., as described above) in the presence of a silane of formula HX¹-W-SiY₃₋ₓ(R)ₓ (in some embodiments, H₂N-(CH₂)ₙ-SiY₃). Useful aminosilanes include, for example, H₂NCH₂CH₂CH₂Si(OC₂H₅)₃; H₂NCH₂CH₂CH₂Si(OCH₃)₃; H₂NCH₂CH₂CH₂Si(O-N=C(CH₃)(C₂H₅))₃; HSCH₂CH₂CH₂Si(OCH₃)₃; HO(C₂H₄O)₃C₂H₄N(CH₃)(CH₂)₃Si(OC₄H₉)₃; H₂NCH₂C₆H₄CH₂CH₂Si(OCH₃)₃; HSCH₂CH₂CH₂Si(OCOCH₃)₃; HN(CH₃)CH₂CH₂Si(OCH₃)₃; HSCH₂CH₂CH₂SiCH₃(OCH₃)₂; (H₃CO)₃SiCH₂CH₂CH₂NHCH₂CH₂CH₂Si(OCH₃)₃; HN(CH₃)C₃H₆Si(OCH₃)₃; CH₃CH₂OOCCH₂CH(COOCH₂CH₃)HNC₃H₆Si(OCH₂CH₃)₃; C₆H₅NHC₃H₆Si(OCH₃)₃; H₂NC₃H₆SiCH₃(OCH₂CH₃)₂; HOCH(CH₃)CH₂OCONHC₃H₆Si(OCH₂CH₃)₃; (HOCH₂CH₂)₂NCH₂CH₂CH₂Si(OCH₂CH₃)₃; and mixtures thereof.

In some embodiments, the fluorinated silane comprises at least one reactive fluorinated silane, as described above, and a compound of the formula (V):

(R⁶)_{q}M(Y¹)_{p-q} V,

wherein M represents an element of valency p+q selected from the group consisting of Si, Ti, Zr, B, Al, Ge, V, Pb, Sn and Zn (in some embodiments selected from the group consisting of Ti, Zr, Si and Al); R⁶ represents a non-hydrolysable group (e.g., an alkyl group of 1 to 20 carbon atoms which may be straight chained or branched and may include cyclic hydrocarbon structures, a C₆-C₃₀ aryl group, optionally substituted by one or more substituents selected from halogens and C₁-C₄ alkyl groups, or a C₇-C₃₀ arylalkyl group); p is 3 or 4 depending on the valence of M; q is 0,1 or 2; and Y¹ represents a hydrolysable group (e.g., alkoxy, acyloxy, and halogen). Compounds of formula V and formulations containing compounds of formula V, fluorinated silanes, and optionally other crosslinking agents are described, for example, in U.S. Pat. No. 6,716,534 (Moore et al.).

Representative examples of compounds of formula V include tetramethoxysilane, tetraethoxysilane, methyl triethoxysilane, dimethyldiethoxysilane, octadecyltriethoxysilane, methyl trichlorosilane, tetra-methyl orthotitanate, tetra ethyl orthotitanate, tetra-iso-propyl orthotitanate, tetra-n-propyl orthotitanate, tetraethyl zirconate, tetra-iso-propyl zirconate tetra-n-propyl zirconate. Mixtures of compounds of formula V may also be used in the preparation of fluorinated silanes.

Typically the fluorinated silane is dissolved or dispersed in a dispersing medium (e.g., water and/or organic solvent (e.g., alcohols, ketones, esters, alkanes and/or fluorinated solvents (e.g., hydrofluoroethers and/or perfluorinated carbons)) that is then applied to at least one of the fracture or proppant (including in some embodiments, treating the proppant prior to injecting the proppants into the fracture). The amount of liquid medium used should be sufficient to allow the solution or dispersion to generally evenly wet the fracture and/or proppant being treated. Typically, the concentration of the fluorinated silane in the solution/dispersion solvent is the range from about 5% to about 20% by weight, although amounts outside of this range may also be useful. Some formulations containing fluorinated silanes (e.g., of formula I) that may be useful are included in U.S. Pat. No. 6,613,860 (Dams et al.). For proppant treated prior to injection into the fracture, the proppant can be treated, for example, with the fluorinated silane solution/dispersion at temperatures in the range from about 25°C to about 50°C, although temperatures outside of this range may also be useful. The treatment solution/dispersion can be applied to the proppant prior to injection into the fracture using techniques known in the art for applying solutions/dispersions to particles (e.g., mixing the solution/dispersion and proppant in a vessel (in some embodiments under reduced pressure) or spraying the solutions/dispersions onto the proppant).

For treatment of the fracture and/or proppant present in the fracture, the treatment solution/dispersion can be applied using techniques known in the art for injecting solutions/dispersions to fractured subterranean formations (e.g., utilizing a coiled a coiled tubing unit (CTU) or the like).

In some embodiments, it may be desirable for the treatment solution to include contain viscosity enhancing agents (e.g., polymeric viscosifiers), electrolytes, corrosion inhibitors, scale inhibitors, and other such additives that are common to a fracturing fluid.

After application of the treatment solution/dispersion to the proppant prior to injection into the fracture, the liquid medium can be removed using techniques known in the art (e.g., drying the particles in an oven). After application of the treatment solution/dispersion to the proppant present in the fracture and/or the fracture, the liquid medium can be removed using techniques known in the art (e.g., allowing the fracture to begin production of hydrocarbons). Typically, about 0.1 to about 5 (in some embodiments, for example, about 0.5 to about 2) percent by weight fluorinated silane is added to the proppant and/or fracture, although amounts outside of this range may also be useful.

Hydrolysis of the Y groups (i.e., alkoxy, acyloxy, or halogen) of reactive fluorinated silanes typically generates silanol groups, which participate in condensation reactions to form fluorinated siloxanes, for example, according to Scheme I, and/or participate in bonding interactions with silanol groups or other metal hydroxide groups on the surface of the proppant particles). The bonding interaction may be through a covalent bond (e.g., through a condensation reaction) or through hydrogen bonding. Hydrolysis can occur, for example, in the presence of water optionally in the presence of an acid or base (in some embodiments, acid). The water necessary for hydrolysis made be added to a formulation containing the fluorinated silane that is used to coat the particles (e.g., proppants), may be adsorbed to the surface of the particles, or may be present in the atmosphere to which the fluorinated silane is exposed (e.g., an atmosphere having a relative humidity of at least 10%, 20%, 30%, 40%, or even at least 50%). Water (e.g., brine) may be present in a subterranean geological formation comprising hydrocarbons and may cause hydrolysis of hydrolysable groups on a fluorinated silane (and cause condensation to provide a fluorinated siloxane) during the injection of particles into a fracture of the formation. The water present in the subterranean geological formation may be natural occurring water (e.g., connate water) or water from a man-made source (e.g., hydraulic fracturing or waterflooding).

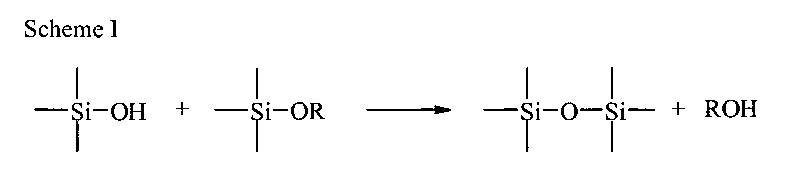

Under neutral pH conditions, the condensation of silanol groups is typically carried out at elevated temperature (e.g., in a range from 40°C to 200°C or even 50°C to 100°C). Under acidic conditions, the condensation of silanol groups may be carried out at room temperature (e.g., in a range from about 15°C to about 30°C or even 20°C to 25°C). The rate of the condensation reaction is typically dependent upon temperature and the concentration of fluorinated silane (e.g., in a formulation containing the fluorinated silane).

Techniques for fracturing subterranean geological formation comprising hydrocarbons are known in the art, as are techniques for injecting proppants into the fractured formation to prop open fracture openings. In some methods, a hydraulic fluid is injected into the subterranean geological formation at rates and pressures sufficient to open a fracture therein. The fracturing fluid (usually water with specialty high viscosity fluid additives) when injected at the high pressures exceeds the rock strength and opens a fracture in the rock. Proppant can be included in the fracturing fluid.

An advantage, in some embodiments, of treated particles having a plurality of pores is that the treated particle has at least one of water or oil imbibition up to 95% as compared to a comparable, untreated particle. The water and oil absorption (i.e., water and oil imbibition) of treated proppant can be measured immersing about 10 grams of the treated proppant in about 20 grams of deionized water or a tetradecane solution (obtained from Sigma-Aldrich, St Louis, MO), respectively, for about 1 hour. The water or oil, respectively, is then filtered off with filter paper (Qualitative Grade 4); Whatman Filter Paper, Florham Park, NJ. The surface water or oil, respectively, is then carefully removed with paper towel, and the proppant again weighed. The water or oil, respectively, absorption is then calculated based on the difference in weight before and after immersion in the water or oil, respectively. The water or oil absorption, respectively, is the average of two measurements.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Prophetic Example

A fracture fluid comprising proppant (e.g., bauxite particles) is injected into a well in a subterranean formation that produces hydrocarbons. The fracture fluid is injected at a pressure that is above the fracture pressure of the formation, resulting in a fracture and placement of the proppant in the fracture zone. The fracturing fluid is subsequently produced once the well is opened for production. Next, a methanolic treatment solution containing 99 percent by weight methanol and 1 percent by weight of fluorinated silane is injected into the fracture. The treatment solution is injected into the fracture at a pressure sufficient to wet substantially the entire fracture and proppant in the fracture, but not at a pressure high enough to introduce new fractures into the formation. The treatment remains in the proppant filled fracture long enough for the silane to treat the fracture and the proppant (e.g., about 1 hour). The well is then put back on production, and the treatment fluid is produced, leaving behind the proppant and fluorinated siloxane.

## Claims

1. A method of treating proppant particles present in a fractured subterranean geological formation comprising hydrocarbons, the method comprising injecting fluorinated silane into the fracture to treat the proppant particles in-situ, wherein the fluorinated silane comprises at least one reactive fluorinated silane selected from the group consisting of:
Rf{-Q-[SiY₃₋ₓ(R)ₓ]_{y}}_{z};
a polymeric fluorinated composition comprising:
at least one divalent unit represented by the formula: 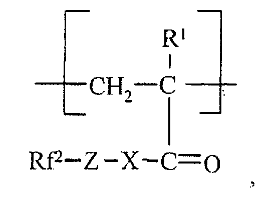 and
at least one of
a divalent unit represented by the formula: 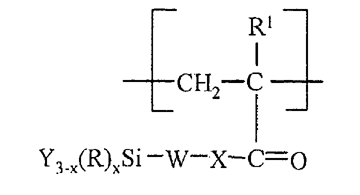 or
a chain-tenninating group represented by the formula:
-S-W-SiY₃₋ₓ(R)ₓ;
and
a fluorinated urethane oligomer of at least two repeat units comprising:
at least one end group represented by the formula -O-Z-Rf², and
at least one end group represented by the formula -X¹-W-SiY₃₋ₓ(R)ₓ;
wherein
Rf is a monovalent or multivalent perfluoropolyether group having two or more in-chain oxygen atoms;
Rf² is a monovalent perfluoroalkyl group optionally interrupted by at least one -O-;
each R is independently selected from the group consisting of alkyl having one to six carbon atoms and aryl;
Q is a divalent or trivalent organic linking group;
each Y is independently selected from the group consisting of hydroxyl, alkoxy, acyloxy, and halogen;
each R¹ is independently selected from the group consisting of hydrogen and alkyl having one to four carbon atoms;
each W is independently selected from the group consisting of alkylene, arylalkylene, and arylene, wherein alkylene is optionally interrupted by or substituted by at least one heteroatom;
each X is independently selected from the group consisting of -NH-, -O- and -S-;
X¹ is selected from the group consisting of-N(R³)-, -S-, -O-, -O-C(O)-NH-, and -O-alkylene-O-C(O)-NH-;
Z is a divalent organic linking group;
x is 0, 1, or 2;
y is 1 or 2; and
z is 1, 2, 3, or 4.

2. The method according to claim 1, wherein before injecting the fluorinated silane into the fracture to treat the prappant particles in-situ, the method further comprises:
injecting a hydraulic fluid into a subterranean geological formation comprising hydrocarbons at a rate and pressure sufficient to open a fracture therein; and
injecting into the fracture a fracture fluid comprising a plurality of proppant particles.

3. The method according to claim 1 or 2, wherein the fluorinated silane comprises at least one fluorinated urethane oligomer of at least two repeat units comprising:
at least one end group represented by the formula
-O-(CH₂)ₙN(R⁴)S(O)₂-Rf³,
and
at least one end group represented by the formula
-NH-(CH₂)ₙ-SiY₃;
wherein
R⁴ is alkyl having one to four carbon atoms;
Rf³ is a perfluoroalkyl group having from one to eight carbon atoms;
each Y is independently selected from the group consisting of hydroxyl, alkoxy, acyloxy, and halogen; and
each n is independently an integer from 1 to 4.

4. The method according to any preceding claim, wherein at least a portion of the proppant particles are ceramic particles.

5. The method according to any of claims 1 to 3, wherein at least a portion of the proppant particles are engineered particles of resin coated sand, sintered bauxite, crystalline ceramic bubbles, or ceramic beads.

6. The method according to any preceding claim, wherein at least a portion of the proppant particles are at least 500 micrometers in size.

7. The method according to any preceding claim, wherein at least a portion of the treated proppant particles have a plurality of pores, and wherein at least a portion of the treated proppant particles have at least one of water or oil imbibition up to 95% as compared to comparable, untreated proppant particles.

8. A method of fracturing a subterranean geological formation comprising hydrocarbons, the method comprising:
injecting a hydraulic fluid into a subterranean geological formation comprising hydrocarbons at a rate and pressure sufficient to open a fracture therein;
injecting fluorinated silane into the fracture to treat the fracture in-situ, wherein the fluorinated silane comprises at least one reactive fluorinated silane selected from the group consisting of:
Rf{-Q-[SiY₃₋ₓ(R)ₓ]_{y}}_{z};
a polymeric fluorinated composition comprising:
at least one divalent unit represented by the formula: 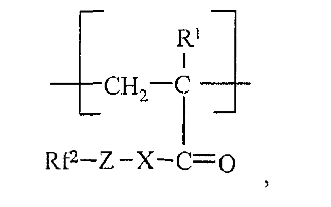 and
at least one of
a divalent unit represented by the formula: 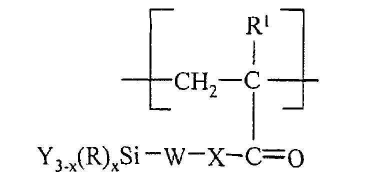 or
a chain-terminating group represented by the formula:
-S-W-SiY₃₋ₓ(R)ₓ;
and
a fluorinated urethane oligomer of at least two repeat units comprising:
at least one end group represented by the formula -O-Z-Rf²; and
at least one end group represented by the formula -X¹-W-SiY₃₋ₓ(R)ₓ; wherein
Rf is a monovalent or multivalent perfluoroalkyl group optionally interrupted by at least one -O-;
Rf² is a monovalent perfluoroalkyl group optionally interrupted by at least one -O-;
each R is independently selected from the group consisting of alkyl having one to six carbon atoms and aryl;
Q is a divalent or trivalent organic linking group;
each Y is independently selected from the group consisting of hydroxyl, alkoxy, acyloxy, and halogen;
each R¹ is independently selected from the group consisting of hydrogen and alkyl having one to four carbon atoms;
each W is independently selected from the group consisting of alkylene, arylalkylene, and arylene, wherein alkylene is optionally interrupted by or substituted by at least one heteroatom;
each X is independently selected from the group consisting of -NH-, -O-, and -S-;
X¹ is selected from the group consisting of -N(R³)-, -S-, -O-, -O-C(O)-NH-, and -O-alkylene-O-C(O)-NH-;
Z is a divalent organic linking group;
x is 0, 1, or 2;
y is 1 or 2; and
z is 1, 2, 3, or 4, and
after injecting the fluorinated silane into the fracture, injecting a fracture fluid comprising a plurality of proppant particles into the fracture.

9. The method according to claim 8, wherein prior to injecting the fluorinated silane into the fracture, the method further comprises injecting a fracture fluid comprising a plurality of proppant particles into the fracture.

10. The method according to claim 8 or 9, wherein at least some of the proppant injected into the fracture are treated with the fluorinated silane prior to their injection.

11. The method according to any of claims 8 to 10, wherein the fluorinated silane comprises at least one fluorinated urethane oligomer of at least two repeat units comprising:
at least one end group represented by the formula
-O-(CH₂)ₙN(R⁴)S(O)₂-Rf³,
and
at least one end group represented by the formula
-NH-(CH₂)ₙ-SiY₃;
wherein
R⁴ is alkyl having one to four carbon atoms;
Rf³ is a perfluoroalkyl group having from one to eight carbon atoms;
each Y is independently selected from the group consisting of hydroxyl, alkoxy, acyloxy, and halogen; and
each n is independently an integer from 1 to 4.

## Patentansprüche

1. Verfahren zur Behandlung von in einer Kohlenwasserstoffe umfassenden frakturierten unterirdischen geologischen Formation vorliegenden Stützmittelteilchen, bei dem man zur Behandlung der Stützmittelteilchen in situ in die Fraktur ein fluoriertes Silan einpresst, wobei das fluorierte Silan mindestens ein reaktives fluoriertes Silan aus der Gruppe bestehend aus:
Rf{-Q-[SiY₃₋ₓ(R)ₓ]_{y}}_{z};
eine polymere fluorierte Zusammensetzung, umfassend:
mindestens eine zweiwertige Einheit der Formel: 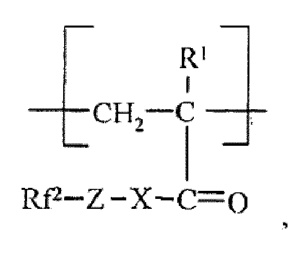 und
eine zweiwertige Einheit der Formel: 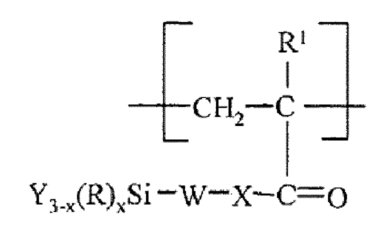 oder
eine Kettenabbruchgruppe der Formel:
-S-W-SiY₃₋ₓ(R)ₓ;
und
ein fluoriertes Urethanoligomer mit mindestens zwei Wiederholungseinheiten, umfassend:
mindestens eine Endgruppe der Formel -O-Z-Rf² und
mindestens eine Endgruppe der Formel -X¹- W-SiY₃₋ₓ(R)ₓ;
wobei
Rf für eine einwertige oder mehrwertige Perfluorpolyethergruppe mit zwei oder mehr kettenständigen Sauerstoffatomen steht;
Rf² für eine einwertige Perfluoralkylgruppe steht, die gegebenenfalls durch mindestens ein -O- unterbrochen ist;
R jeweils unabhängig voneinander aus der Gruppe bestehend aus Alkyl mit einem bis sechs Kohlenstoffatomen und Aryl ausgewählt ist;
Q für eine zweiwertige oder dreiwertige organische Brückengruppe steht;
Y jeweils unabhängig voneinander aus der Gruppe bestehend aus Hydroxyl, Alkoxy, Acyloxy und Halogen ausgewählt ist;
R¹ jeweils unabhängig voneinander aus der Gruppe bestehend aus Wasserstoff und Alkyl mit einem bis vier Kohlenstoffatomen ausgewählt ist;
W jeweils unabhängig voneinander aus der Gruppe bestehend aus Alkylen,
Arylalkylen und Arylen ausgewählt ist, wobei Alkylen gegebenenfalls durch mindestens ein Heteroatom unterbrochen oder substituiert ist;
X jeweils unabhängig voneinander aus der Gruppe bestehend aus -NH-, -O-und -S- ausgewählt ist;
X¹ aus der Gruppe bestehend aus -N(R³), -S-, -O-, -O-C(O)-NH- und -O-Alkylen-O-C(O)-NH ausgewählt ist;
Z für eine zweiwertige organische Brückengruppe steht;
x für 0, 1 oder 2 steht;
y für 1 oder 2 steht und
z für 1, 2, 3 3 oder 4 steht;
umfasst.

2. Verfahren nach Anspruch 1, bei man vor dem Einpressen des fluorierten Silans in die Fraktur zur Behandlung der Stützmittelteilchen in situ ferner:
in eine Kohlenwasserstoffe umfassende unterirdische geologische Formation ein hydraulisches Fluid einpresst, und zwar mit einer solchen Rate und bei einem solchen Druck, dass sich in der Formation eine Fraktur öffnet; und
in die Fraktur ein mehrere Stützmittelteilchen umfassendes Frakturfluid einpresst.

3. Verfahren nach Anspruch 1 oder 2, bei dem das fluorierte Silan mindestens ein fluoriertes Urethanoligomer mit mindestens zwei Wiederholungseinheiten, umfassend:
mindestens eine Endgruppe der Formel -O-(CH₂)ₙN(R⁴)S(O)₂Rf³ und
mindestens eine Endgruppe der Formel -NH-(CH₂)ₙ-SiY₃;
wobei
R⁴ für Alkyl mit einem bis vier Kohlenstoffatomen steht;
Rf³ für eine Perfluoralkylgruppe mit einem bis acht Kohlenstoffatomen steht;
Y jeweils unabhängig voneinander aus der Gruppe bestehend aus Hydroxyl, Alkoxy, Acyloxy und Halogen ausgewählt ist und
n jeweils unabhängig voneinander für eine ganze Zahl von 1 bis 4 steht; umfasst.

4. Verfahren nach einem der vorhergehenden Ansprüche, bei dem es sich bei mindestens einem Teil der Stützmittelteilchen um Keramikteilchen handelt.

5. Verfahren nach einem der Ansprüche 1 bis 3, bei dem es sich bei mindestens einem Teil der Stützmittelteilchen um synthetische Teilchen aus harzbeschichtetem Sand, gesintertem Bauxit, Hohlkugeln aus kristalliner Keramik oder Keramikperlen handelt.

6. Verfahren nach einem der vorhergehenden Ansprüche, bei dem mindestens ein Teil der Stützmittelteilchen eine Größe von mindestens 500 Mikrometer aufweist.

7. Verfahren nach einem der vorhergehenden Ansprüche, bei dem mindestens ein Teil der behandelten Stützmittelteilchen mehrere Poren aufweist und mindestens ein Teil der behandelten Stützmittelteilchen eine Wasser- oder Ölaufnahme von bis zu 95% im Vergleich zu vergleichbaren, unbehandelten Stützmittelteilchen aufweist.

8. Verfahren zum Frakturieren einer Kohlenwasserstoffe umfassenden unterirdischen geologischen Formation, bei dem man:
in eine Kohlenwasserstoffe umfassende unterirdische geologische Formation ein hydraulisches Fluid einpresst, und zwar mit einer solchen Rate und bei einem solchen Druck, dass sich in der Formation eine Fraktur öffnet;
zur Behandlung der Fraktur in situ in die Fraktur fluoriertes Silan einpresst, wobei das fluorierte Silan mindestens ein reaktives fluoriertes Silan aus der Gruppe bestehend aus:
Rf{-Q-[SiY₃₋ₓ(R)ₓ]_{y}}_{z};
eine polymere fluorierte Zusammensetzung, umfassend:
mindestens eine zweiwertige Einheit der Formel: 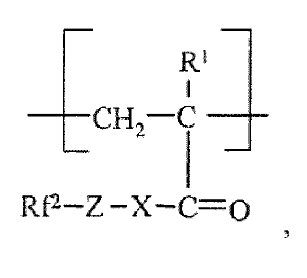 und
eine zweiwertige Einheit der Formel: 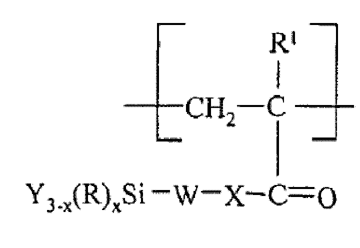 oder
eine Kettenabbruchgruppe der Formel:
-S-W-SiY₃₋ₓ(R)ₓ;
und
ein fluoriertes Urethanoligomer mit mindestens zwei Wiederholungseinheiten, umfassend:
mindestens eine Endgruppe der Formel -O-Z-Rf² und
mindestens eine Endgruppe der Formel -X¹- W-SiY₃₋ₓ(R)ₓ;
wobei
Rf für eine einwertige oder mehrwertige Perfluoralkylgruppe steht, die gegebenenfalls durch mindestens ein -O- unterbrochen ist;
Rf² für eine einwertige Perfluoralkylgruppe steht, die gegebenenfalls durch mindestens ein -O- unterbrochen ist;
R jeweils unabhängig voneinander aus der Gruppe bestehend aus Alkyl mit einem bis sechs Kohlenstoffatomen und Aryl ausgewählt ist;
Q für eine zweiwertige oder dreiwertige organische Brückengruppe steht;
Y jeweils unabhängig voneinander aus der Gruppe bestehend aus Hydroxyl, Alkoxy, Acyloxy und Halogen ausgewählt ist;
R¹ jeweils unabhängig voneinander aus der Gruppe bestehend aus Wasserstoff und Alkyl mit einem bis vier Kohlenstoffatomen ausgewählt ist;
W jeweils unabhängig voneinander aus der Gruppe bestehend aus Alkylen,
Arylalkylen und Arylen ausgewählt ist, wobei Alkylen gegebenenfalls durch mindestens ein Heteroatom unterbrochen oder substituiert ist;
X jeweils unabhängig voneinander aus der Gruppe bestehend aus -NH-, -O-und -S- ausgewählt ist;
X¹ aus der Gruppe bestehend aus -N(R³), -S-, -O-, -O-C(O)-NH- und -O-Alkylen-O-C(O)-NH ausgewählt ist;
Z für eine zweiwertige organische Brückengruppe steht;
x für 0, 1 oder 2 steht;
y für 1 oder 2 steht und
z für 1, 2, 3 oder 4 steht;
umfasst; und
nach dem Einpressen des fluorierten Silans in die Fraktur ein mehrere Stützmittelteilchen umfassendes Frakturfluid einpresst.

9. Verfahren nach Anspruch 8, bei dem man vor dem Einpressen des fluorierten Silans in die Fraktur ferner in die Fraktur ein mehrere Stützmittelteilchen umfassendes Frakturfluid einpresst.

10. Verfahren nach Anspruch 8 oder 9, bei dem man mindestens einen Teil der in die Fraktur eingepressten Stützmittelteilchen vor dem Einpressen mit dem fluorierten Silan behandelt.

11. Verfahren nach einem der Ansprüche 8 bis 10, bei dem das fluorierte Silan mindestens ein fluoriertes Urethanoligomer mit mindestens zwei Wiederholungseinheiten, umfassend:
mindestens eine Endgruppe der Formel -O-(CH₂)ₙN(R⁴)S(O)₂-Rf³ und
mindestens eine Endgruppe der Formel -NH-(CH₂)ₙ-SiY₃;
wobei
R⁴ für Alkyl mit einem bis vier Kohlenstoffatomen steht;
Rf³ für eine Perfluoralkylgruppe mit einem bis acht Kohlenstoffatomen steht;
Y jeweils unabhängig voneinander aus der Gruppe bestehend aus Hydroxyl, Alkoxy, Acyloxy und Halogen ausgewählt ist und
n jeweils unabhängig voneinander für eine ganze Zahl von 1 bis 4 steht; umfasst.

## Revendications

1. Procédé de traitement de particules d'agent de soutènement présentes dans une formation géologique souterraine fracturée comprenant des hydrocarbures, le procédé comprenant l'injection de silane fluoré dans la fracture pour traiter les particules d'agent de soutènement in situ, le silane fluoré comprenant au moins un silane fluoré réactif sélectionné dans le groupe constitué de :
Rf{-Q-[SiY₃₋ₓ(R)ₓ]_{y}}_{z};
une composition polymère fluorée comprenant :
au moins une unité divalente représentée par la formule : 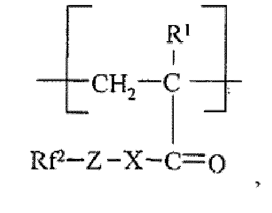 et
au moins l'un de
une unité divalente représentée par la formule : 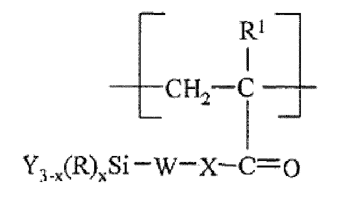 ou
un groupe de terminaison de chaîne représenté par la formule :
-S-W-SiY₃₋ₓ(R)ₓ;
et
un oligomère d'uréthane fluoré constitué d'au moins deux unités de répétition comprenant :
au moins un groupe terminal représenté par la formule -O-Z-Rf², et
au moins un groupe terminal représenté par la formule
-X¹-W-SiY₃₋ₓ(R)ₓ ;
Rf étant un groupe perfluoropolyéther monovalent ou multivalent comportant 2 atomes d'oxygène ou plus dans la chaîne ;
Rf² étant un groupe perfluoroalkyle monovalent qui peut éventuellement être interrompu par au moins un -O- ;
chaque R étant sélectionné indépendamment dans le groupe constitué d'un groupe alkyle comportant 1 à 6 atomes de carbone et d'un groupe aryle ;
Q étant un groupe de liaison organique divalent ou trivalent ;
chaque Y étant sélectionné indépendamment dans le groupe constitué d'un groupe hydroxyle, alcoxy, acyloxy, et d'un atome d'halogène ;
chaque R¹ étant sélectionné indépendamment dans le groupe constitué d'un atome d'hydrogène et d'un groupe alkyle comportant 1 à 4 atomes de carbone ;
chaque W étant sélectionné indépendamment dans le groupe constitué d'un groupe alkylène, arylalkylène, et arylène, le groupe alkylène pouvant éventuellement être interrompu par ou substitué par au moins un hétéroatome ;
chaque X étant sélectionné indépendamment dans le groupe constitué de - NH-, -O- et -S- ;
X¹ étant sélectionné dans le groupe constitué de -N(R³)-, -S-, -O-, -O-C(O)-NH-, et -O-alkylène-O-C(O)-NH- ;
Z étant un groupe de liaison organique divalent ;
x valant 0, 1 ou 2 ;
y valant 1 ou 2 ; et
z valant 1, 2, 3 ou 4.

2. Procédé selon la revendication 1, le procédé comprenant en outre, avant l'injection du silane fluoré dans la fracture pour traiter les particules d'agent de soutènement in situ :
l'injection d'un fluide hydraulique dans une formation géologique souterraine comprenant des hydrocarbures à un débit et à une pression suffisants pour ouvrir une fracture dans celle-ci ; et
l'injection dans la fracture d'un fluide pour fractures comprenant une pluralité de particules d'agent de soutènement.

3. Procédé selon la revendication 1 ou 2, dans lequel le silane fluoré comprend au moins un oligomère d'uréthane fluoré constitué d'au moins deux unités de répétition comprenant :
au moins un groupe terminal représenté par la formule
-O-(CH₂)ₙN(R⁴)S(O)₂-Rf³,
et
au moins un groupe terminal représenté par la formule
-NH-(CH₂)ₙ-SiY₃ ;
R⁴ étant un groupe alkyle comportant 1 à 4 atomes de carbone ;
Rf³ étant un groupe perfluoroalkyle comportant 1 à 8 atomes de carbone ; chaque Y étant sélectionné indépendamment dans le groupe constitué d'un groupe hydroxyle, alcoxy, acyloxy, et d'un atome d'halogène ; et
chaque n étant indépendamment un nombre entier qui vaut de 1 à 4.

4. Procédé selon l'une quelconque des revendications précédentes, dans lequel au moins une partie des particules d'agent de soutènement sont des particules de céramique.

5. Procédé selon l'une quelconque des revendications 1 à 3, dans lequel au moins une partie des particules d'agent de soutènement sont des particules techniques constituées de sable enrobé de résine, de bauxite frittée, de sphères creuses de céramique cristalline, ou de billes de céramique.

6. Procédé selon l'une quelconque des revendications précédentes, dans lequel au moins une partie des particules d'agent de soutènement ont une taille d'au moins 500 micromètres.

7. Procédé selon l'une quelconque des revendications précédentes, dans lequel au moins une partie des particules d'agent de soutènement traitées comportent une pluralité de pores, et dans lequel au moins une partie des particules d'agent de soutènement traités présentent au moins l'une d'une imbibition d'eau ou d'une imbibition d'huile allant jusqu'à 95 % par comparaison avec des particules d'agent de soutènement comparables, non traitées.

8. Procédé de fracturation d'une formation géologique souterraine comprenant des hydrocarbures, le procédé comprenant :
l'injection d'un fluide hydraulique dans une formation géologique souterraine comprenant des hydrocarbures à un débit et à une pression suffisants pour ouvrir une fracture dans celle-ci ;
l'injection d'un silane fluoré dans la fracture pour traiter la fracture in situ, le silane fluoré comprenant au moins un silane fluoré réactif sélectionné dans le groupe constitué de :
Rf{-Q-[SiY₃₋ₓ(R)ₓ]_{y}}_{z} ;
une composition polymère fluorée comprenant :
au moins une unité divalente représentée par la formule : 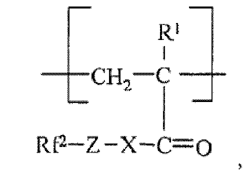 et
au moins l'un de
une unité divalente représentée par la formule : 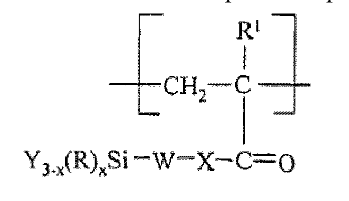 ou
un groupe de terminaison de chaîne représenté par la formule :
-S-W-SiY₃₋ₓ(R)ₓ ; et
un oligomère d'uréthane fluoré constitué d'au moins deux unités de répétition comprenant :
au moins un groupe terminal représenté par la formule -O-Z-Rf², et
au moins un groupe terminal représenté par la formule
-X¹-W-SiY₃₋ₓ(R)ₓ ;
Rf étant un groupe perfluoroalkyle monovalent ou multivalent qui peut éventuellement être interrompu par au moins un -O- ;
Rf² étant un groupe perfluoroalkyle monovalent qui peut éventuellement être interrompu par au moins un -O- ;
chaque R étant sélectionné indépendamment dans le groupe constitué d'un groupe alkyle comportant 1 à 6 atomes de carbone et d'un groupe aryle ;
Q étant un groupe de liaison organique divalent ou trivalent ;
chaque Y étant sélectionné indépendamment dans le groupe constitué d'un groupe hydroxyle, alcoxy, acyloxy, et d'un atome d'halogène ;
chaque R¹ étant sélectionné indépendamment dans le groupe constitué d'un atome d'hydrogène et d'un groupe alkyle comportant 1 à 4 atomes de carbone ;
chaque W étant sélectionné indépendamment dans le groupe constitué d'un groupe alkylène, arylalkylène, et arylène, le groupe alkylène pouvant éventuellement être interrompu par ou substitué par au moins un hétéroatome ;
chaque X étant sélectionné indépendamment dans le groupe constitué de - NH-, -O- et -S- ;
X¹ étant sélectionné dans le groupe constitué de -N(R³)-, -S-, -O-, -O-C(O)-NH-, et -O-alkylène-O-C(O)-NH- ;
Z étant un groupe de liaison organique divalent ;
x valant 0, 1 ou 2 ;
y valant 1 ou 2 ; et
z valant 1, 2, 3 ou 4, et
après l'injection du silane fluoré dans la fracture, l'injection d'un fluide pour fractures comprenant une pluralité de particules d'agent de soutènement dans la fracture.

9. Procédé selon la revendication 8, le procédé comprenant en outre, avant l'injection du silane fluoré dans la fracture, l'injection d'un fluide pour fractures comprenant une pluralité de particules d'agent de soutènement dans la fracture.

10. Procédé selon la revendication 8 ou 9, dans lequel au moins certains des agents de soutènement injectés dans la fracture sont traités avec le silane fluoré avant leur injection.

11. Procédé selon l'une quelconque des revendications 8 à 10, dans lequel le silane fluoré comprend au moins un oligomère d'uréthane fluoré constitué d'au moins deux unités de répétition comprenant :
au moins un groupe terminal représenté par la formule
-O-(CH₂)ₙN(R⁴)S(O)₂-Rf³,
et
au moins un groupe terminal représenté par la formule
-NH-(CH₂)ₙ-SiY³ ;
R⁴ étant un groupe alkyle comportant 1 à 4 atomes de carbone ;
Rf³ étant un groupe perfluoroalkyle comportant 1 à 8 atomes de carbone ; chaque Y étant sélectionné indépendamment dans le groupe constitué d'un groupe hydroxyle, alcoxy, acyloxy, et d'un atome d'halogène ; et
chaque n étant indépendamment un nombre entier qui vaut de 1 à 4.
